# FASCICULE DE BREVET EUROPEEN

(11) **EP 0 787 786 B1**
(45) Date de publication et mention de la délivrance du brevet: **24.11.2004**
(21) Numéro de dépôt: 97400172.9
(22) Date de dépôt: 24.01.1997
(51) Int. Cl.: C10G 45/58

(54) **Procédé d'isomérisation de paraffines par distillation réactive**
Verfahren zur Isomerisierung von Paraffinen durch reaktive Distillation
Process for the isomerisation of paraffins by reactive distillation

(30) Priorité: 05.02.1996 FR 9601471
(43) Date de publication de la demande: 06.08.1997
(73) Titulaire: Institut Français du Pétrole, 92502 Rueil-Malmaison (FR)
(72) Inventeur: Lebas, Etienne, 92500 Rueil Malmaison (FR); Jullian, Sophie, 92500 Rueil-Malmaison (FR); Travers, Christine, 92500 Rueil Malmaison (FR); Capron, Pierre, 54150 Briey (FR); Joly, Jean-Francois, 69006 Lyon (FR); Thery, Michel, 69390 Vernaison (FR)

(56) Documents cités:
- EP-A- 0 223 514
- US-A- 4 213 847
- US-A- 4 847 430
- US-A- 5 368 691

## Description

La présente invention concerne un nouveau procédé d'isomérisation d'hydrocarbures, de préférence des paraffines, de façon encore plus préférée en majeure partie des paraffines, contenant principalement de 4 à 8, de préférence principalement de 4 à 6, de façon encore plus préférée principalement 5 et/ou 6 atomes de carbone par molécule, tel qu'il utilise au moins une zone de distillation associée à une zone réactionnelle d'isomérisation, dans lequel ledit flux gazeux est apporté à l'entrée d'au moins un lit catalytique de la zone réactionnelle d'isomérisation interne à la zone de distillation et est introduit séparément de la charge.

De par la suppression, notamment à des fins de protection de l'environnement, des alkyles de plomb dans les essences automobiles, les procédés de production de paraffines ramifiées, et en particulier le procédé d'isomérisation des paraffines normales en paraffines ramifiées revêt actuellement une importance croissante dans l'industrie pétrolière. L'isomérisation du n-butane permet de produire de l'isobutane qui peut être utilisé dans les procédés d'alkylation des oléfines légères par au moins une isoparaffine pour produire des coupes paraffiniques de 5 à 12 atomes de carbone par molécule. Ces coupes ont de hauts indices d'octane. L'isobutane peut également, après déshydrogénation, être utilisé dans la réaction d'éthérification par le méthanol ou l'éthanol. Les éthers ainsi obtenus (MTBE, ETBE) ont des indices d'octane élevés et sont incorporables avec fractions essences (pool essence).

Le procédé d'isomérisation d'hydrocarbures, de préférence des paraffines, contenant principalement de 4 à 8, de préférence principalement de 4 à 6, de façon encore plus préférée principalement 5 et/ou 6 atomes de carbone par molécule est également un procédé qui conduit à des bases essences des indices d'octane élevés et pouvant être directement incorporées aux fractions essence (pool essence).

Ce dernier procédé a fait l'objet de nombreux travaux, trois types différents de catalyseurs sont traditionnellement utilisés pour réaliser cette réaction d'isomérisation :
- les catalyseurs de type Friedel et Crafts, tels que le chlorure d'aluminium, qui sont utilisés à basses températures (environ 20 à 130°C),
- les catalyseurs à base de métal du groupe VIII déposé sur alumine, généralement halogénée, de préférence chlorée, qui sont utilisés à des températures moyennes (environ 150°C), par exemple tels que ceux décrits dans les brevets US-A-2.906.798, US-A-2.993.398, US-A-3.791.960, US-A-4.113.789, US-A-4.149.993, US-A-4.804.803, les demandes de brevet européen EP-A-514.527, EP-A-661.095, EP-A-661.370 EP-A-750.941.
- les catalyseurs zéolithiques comprenant au moins un métal du groupe VIII déposé sur une zéolithe, qui sont utilisés à des températures élevées (250°C et plus), par exemple tels que ceux décrits dans les brevets US-A-4.727.217, US-A-4.789.655, US-A-4.935.578, US-A-4.943.546 et US-A-4.977.121 dans le cas où la zéolithe est une mordénite et ceux décrits dans les brevets US-A-4.724.007, US-A-4.780.736, US-A-4.891.200, US-A-5.157.198, US-A-5.165.906, US-A-5.277.791 et la demande de brevet EP-A-601.924 dans le cas où la zéolithe est la zéolithe oméga. Ces catalyseurs conduisent à des gains d'octane légèrement inférieurs, mais présentent l'avantage d'être plus faciles à mettre en oeuvre et plus résistants aux poisons ; néanmoins de par leur plus faible acidité, ils ne peuvent pas être employés pour l'isomérisation du n-butane.

Les procédés actuels d'isomérisation d'hydrocarbures, de préférence des paraffines, en C₄-C₈ utilisant des catalyseurs au platine déposé sur alumine chlorée à haute activité opèrent sans recyclage, ou avec un recyclage partiel, après fractionnement, des n-paraffines non converties, ou avec un recyclage total après passage sur des lits de tamis moléculaires.

La mise en oeuvre sans recyclage, bien que simple, manque d'efficacité dans l'accroissement de l'indice d'octane. Pour obtenir des indices d'octane élevés, on doit effectuer le recyclage des constituants à faible indice d'octane, après passage soit dans des colonnes de séparation (par exemple un déisohexaniseur) soit sur des tamis moléculaires, en phase liquide ou vapeur.

L'utilisation de tamis moléculaires présente des inconvénients, parmi lesquels on peut citer les difficultés qu'il y a à utiliser des catalyseurs d'isomérisation à base d'alumine halogénée, dans le cas où elle est chlorée, en raison des risques de contamination par l'acide chlorhydrique des tamis moléculaires intégrés, difficultés parfois réglées par la mise en place d'un dispositif de piégeage du chlore entre la zone d'isomérisation et la zone d'adsorption, lorsque c'est possible. Des technologies utilisant des tamis moléculaires et pouvant opérer en présence de réacteur d'isomérisation contenant des catalyseurs à base d'alumine chlorée imprégnée de platine, ont été développées. Par exemple, on peut envisager un système non intégré mettant en oeuvre une étape de stabilisation de l'effluent d'isomérisation avant de l'envoyer à l'étape d'adsorption sur tamis moléculaire. Mais lesdites technologies sont complexes et présentent entre autres l'inconvénient de fonctionner de façon discontinue. C'est pourquoi des systèmes catalytiques moins performants ont été utilisés, à base de zéolithe ne mettant pas en oeuvre de chlore. Il en résulte un produit présentant un indice d'octane inférieur de 1 à 2 points à celui qui aurait été obtenu avec un catalyseur à base d'alumine chlorée. En effet, selon les lois de la thermodynamique, plus la température d'isomérisation est basse, plus la conversion des n-paraffines en isoparaffines est élevée, et de plus, meilleure est la conversion des isomères en C6 à faible indice d'octane (méthylpentanes) en isomères en C6 à plus hauts indices d'octane (diméthylbutanes).

Par ailleurs, on peut considérer les schémas "classiques" utilisant des colonnes de séparation (déisopentaniseur et déisohexaniseur), du fait que les colonnes de séparation peuvent être protégées de la contamination par le chlore. Mais ces schémas sont lourds en équipement et gros consommateurs d'énergie, donc coûteux à mettre en oeuvre. Un schéma à une colonne de séparation (seulement le déisohexaniseur) serait moins coûteux mais ne présenterait pas la faculté de convertir tout le pentane normal en isopentane et, de ce fait, ne permettrait pas d'obtenir les niveaux d'accroissement de l'indice d'octane des schémas de recyclage.

Le brevet US-A-5.087.780 décrit un procédé d'isomérisation de butènes dans un mélange d'hydrocarbures en présence d'hydrogène et d'un catalyseur en lit fixe. Il revendique l'isomérisation d'alcènes à quatre atomes de carbone au moyen d'un procédé comprenant l'alimentation d'une colonne à distillée réactive. Ladite colonne comprend un catalyseur en lit fixe à base de palladium sur alumine permettant de catalyser l'isomérisation de la charge en présence d'hydrogène. Dans ce procédé, l'hydrogène et la charge alimentent conjointement la colonne réactive.

Enfin, le brevet US-A-5.177.283, qui décrit la production d'alkylbenzènes, mentionne la possibilité d'associer à une colonne de fractionnement qui réalise la distillation une seule zone réactionnelle externe, dans le cas de l'isomérisation des paraffines C₄-C₈, l'effluent de ladite zone réactionnelle étant renvoyé dans la colonne juste au-dessous du point où l'on a prélevé la charge de la zone réactionnelle.

La présente invention concerne un procédé permettant d'augmenter le plus possible l'indice d'octane d'une coupe pétrolière contenant des paraffines normales, et permettant en particulier de s'affranchir des inconvénients précités. En effet le procédé selon l'invention est caractérisé en ce qu'il ne comporte pas de technologies de séparation par adsorption sur tamis moléculaires et en ce qu'il intègre les opérations de distillation et d'isomérisation agencées et opérées de manière à maximiser la conversion des normales paraffines en iso-paraffines.

L'invention concerne un procédé d'isomérisation d'une charge comprenant essentiellement des hydrocarbures, de préférence des paraffines, de façon encore plus préférée en majeure partie des paraffines, contenant principalement de 4 à 8 atomes de carbone par molécule, de préférence principalement de 4 à 6 atomes de carbone par molécule, de façon encore plus préférée principalement 5 et/ou 6 atomes de carbone par molécule (c'est-à-dire choisies dans le groupe formé par les paraffines contenant principalement 5 atomes de carbone par molécule et les paraffines contenant principalement 6 atomes de carbone par molécule), tel que l'on traite ladite charge dans une zone de distillation, comportant une zone d'épuisement et une zone de rectification, associée à une zone réactionnelle d'isomérisation, en présence d'un catalyseur d'isomérisation et d'un flux gazeux comprenant, de préférence en majeure partie, de l'hydrogène, dans lequel ledit flux gazeux est apporté à l'entrée d'au moins un lit catalytique de la zone réactionnelle d'isomérisation interne à la zone de distillation et est introduit séparément de la charge.

La charge de la zone réactionnelle est prélevée à la hauteur d'un niveau de prélèvement et représente au moins une partie, de préférence la majeure partie, du liquide coulant dans la zone de distillation, l'effluent de la zone réactionnelle étant au moins en partie, de préférence en majeure partie, réintroduit dans la zone de distillation, de manière à assurer la continuité de la distillation.

La charge qui alimente le procédé selon l'invention provient de toute source connue de l'homme du métier, telle que par exemple une coupe dite de naphta léger provenant d'une unité de fractionnement de naphta ou une coupe dite réformat léger, de préférence quasiment exempte de benzène, et de façon encore plus préférée quasiment exempte de benzène, de tout autre composé insaturé comportant au plus six atomes de carbone par molécule, et éventuellement de tout autre composé tel le cyclohexane ou toute isoparaffine comportant sept atomes de carbone par molécule.

La charge qui alimente la zone de distillation est introduite dans ladite zone généralement au moins à un niveau de ladite zone, de préférence principalement à un seul niveau de ladite zone.

La zone de distillation, qui réalise le fractionnement par distillation en continu tel qu'il est connu de l'homme du métier, comprend généralement au moins une colonne munie d'au moins un interne de distillation choisi dans le groupe formé par les plateaux, les garnissages en vrac et les garnissages structurés, ainsi qu'il est connu de l'homme du métier, tel que l'efficacité globale totale est au moins égale à cinq étages théoriques. Dans les cas connus de l'homme du métier où la mise en oeuvre d'une seule colonne pose des problèmes, on préfère généralement scinder ladite zone de façon à utiliser finalement au moins deux colonnes qui, mises bout à bout, réalisent ladite zone, c'est-à-dire que la zone de rectification, la partie de la zone réactionnelle interne à la zone de distillation et la zone d'épuisement se répartissent sur les colonnes. En pratique, la zone de rectification ou la zone d'épuisement, et de préférence la zone d'épuisement, peut généralement se trouver dans au moins une colonne différente de la colonne comprenant la partie interne de la zone réactionnelle.

La zone réactionnelle d'isomérisation comprend généralement au moins un lit catalytique d'isomérisation, de préférence entre 1 et 4 lit(s) catalytique(s) ; dans le cas où au moins deux lits catalytiques se trouvent incorporés dans la zone de distillation, ces deux lits sont éventuellement séparés par au moins un interne de distillation.

Pour la partie de la zone réactionnelle interne à la zone de distillation, le prélèvement de liquide est fait naturellement par écoulement dans la partie de la zone réactionnelle interne à la zone de distillation, et la réintroduction de liquide en zone de distillation se fait aussi naturellement par écoulement du liquide à partir de la zone réactionnelle interne à la zone de distillation. De plus, le procédé selon l'invention est de préférence tel que l'écoulement du liquide à isomériser est co-courant à l'écoulement du flux gazeux comprenant de l'hydrogène, pour tout lit catalytique de la partie interne de la zone d'isomérisation, et de façon encore plus préférée tel que l'écoulement du liquide à isomériser est co-courant à l'écoulement du flux gazeux comprenant de l'hydrogène et tel que la vapeur dans la colonne est séparée dudit liquide, pour tout lit catalytique de la partie interne de la zone d'isomérisation.

Selon un mode de réalisation du procédé selon l'invention, la zone réactionnelle est totalement interne à la zone de distillation.

Selon un autre mode de réalisation du procédé selon l'invention, le procédé selon l'invention est tel que la zone d'isomérisation est à la fois partiellement interne à la zone de distillation, et partiellement externe à la zone de distillation. Selon un tel mode de réalisation, la zone d'isomérisation comprend au moins deux lits catalytiques, au moins un lit catalytique étant interne à la zone de distillation, et au moins un autre lit catalytique étant externe à la zone de distillation. Selon une des variantes préférées dudit mode de réalisation du procédé selon l'invention, le liquide à isomériser circule d'abord dans la partie externe de la zone d'isomérisation puis la partie interne de ladite zone. De préférence, chaque lit catalytique de la partie externe de la zone d'isomérisation reçoit l'effluent d'un seul niveau de prélèvement. Alors l'effluent d'un lit catalytique de la partie externe de la zone d'isomérisation est réintroduit généralement sensiblement à proximité (c'est-à-dire au-dessous, au-dessus ou à la même hauteur) d'un niveau de prélèvement, de préférence du niveau de prélèvement qui a alimenté ledit lit catalytique, ou éventuellement sensiblement à proximité du niveau d'injection de la charge, si la hauteur du niveau de prélèvement est proche de la hauteur du niveau d'injection de la charge.

Généralement, dans le cas dudit mode de réalisation du procédé selon l'invention, le procédé selon l'invention comprend de 1 à 4 niveau(x) de prélèvement qui alimente(nt) la partie externe de la zone d'isomérisation. Alors, deux cas peuvent se présenter. Dans le premier cas, la partie externe de la zone d'isomérisation est alimentée par un seul niveau de prélèvement, et alors, si ladite partie comprend au moins deux lits catalytiques répartis dans au moins deux réacteurs, lesdits réacteurs sont disposés en série ou en parallèle. Dans le second cas, la partie externe de la zone d'isomérisation est alimentée par au moins deux niveaux de prélèvement. Alors, une partie de la partie externe de la zone d'isomérisation qui est alimentée par un niveau de prélèvement donné, de préférence associé à un seul niveau de réintroduction, comprend généralement au moins un réacteur, de préférence un seul réacteur. Si ladite partie de la partie externe comprend au moins deux lits catalytiques répartis dans au moins deux réacteurs, lesdits réacteurs sont disposés en série ou en parallèle.

Selon un autre mode de réalisation de l'invention, indépendamment ou non des modes de réalisation précédents, le procédé selon l'invention est tel que l'écoulement du liquide à isomériser est co-courant ou contre-courant, de préférence co-courant, à l'écoulement du flux gazeux comprenant de l'hydrogène, pour tout lit catalytique de la zone d'isomérisation.

Généralement, de façon préférée, les conditions opératoires sont judicieusement choisies, en relation avec la nature de la charge et avec d'autres paramètres connus du spécialiste de la distillation réactive, tel que le rapport distillat/charge et le taux de rebouillage en zone d'épuisement. Ainsi, un flux gazeux comprenant de l'hydrogène est généralement recyclé dans la zone de distillation, comme cela a été décrit précedemment, de façon à maintenir une pression partielle d'hydrogène dans la zone de distillation suffisante pour préserver au mieux la bonne activité du catalyseur d'isomérisation. Ledit hydrogène recyclé peut provenir soit de toute source extérieure connue de l'homme du métier, soit du recyclage d'une fraction de l'effluent de tête de la zone de distillation. L'hydrogène utilisé selon l'invention dans ce recyclage, provenant de toute source extérieure connue de l'homme du métier, peut provenir de toute source produisant de l'hydrogène à au moins 50 % volume de pureté, de préférence au moins 80 % volume de pureté et de façon encore plus préférée au moins 90 % volume de pureté. Par exemple, on peut citer l'hydrogène provenant des procédés de reformage catalytique, de méthanation, de P.S.A. (adsorption par alternance de pression), de génération électrochimique ou de vapocraquage. Selon un des modes de réalisation préférés du procédé selon l'invention, une fraction de l'hydrogène compris dans l'effluent de tête de la zone de distillation est récupérée, puis comprimée et réutilisée dans la zone de distillation. Selon un autre des modes de réalisation du procédé selon l'invention, une fraction de l'hydrogène compris dans l'effluent de tête de la zone de distillation est récupérée, puis injectée en amont des étapes de compression associées à une unité de reformage catalytique, en mélange avec de l'hydrogène provenant de ladite unité, ladite unité opérant de préférence à basse pression, c'est-à-dire généralement une pression inférieure à 8 bar (1 bar = 10⁵ Pa).

Le catalyseur d'isomérisation disposé dans la partie interne de la zone de distillation l'est suivant les différentes technologies proposées pour conduire des distillations catalytiques. Ces technologies ont été développées principalement pour les réactions d'éthérification, qui impliquent le contact entre des réactifs en phase liquide homogène et le catalyseur solide. Elles sont essentiellement de deux types.

Suivant le premier type de technologies, la réaction et la distillation procèdent simultanément dans le même espace physique, comme l'enseignent par exemple la demande de brevet WO-A-90/02.603, les brevets US-A-4.471.154, US-A-4.475.005, US-A-4.215.011, US-A-4.307.254, US-A-4.336.407, US-A-4.439.350, US-A-5.189.001, US-A-5.266.546, US-A-5.073.236, US-A-5.215.011, US-A-5.275.790, US-A-5.338.517, US-A-5.308.592, US-A-5.236.663, US-A-5.338.518, ainsi que les brevets EP-B1-0.008.860, EP-B1-0.448.884, EP-B1-0.396.650 et EP-B1-0.494.550 et la demande de brevet EP-A1-0.559.511. Le catalyseur est alors généralement en contact avec une phase liquide descendante, générée par le reflux introduit en tête de la zone de distillation, et avec une phase vapeur ascendante, générée par la vapeur de rebouillage introduite en fond de zone. Selon ce type de technologies, le flux gazeux comprenant de l'hydrogène nécessaire à la zone réactionnelle, pour la réalisation du procédé selon l'invention, pourrait être joint à la phase vapeur, sensiblement à l'entrée d'au moins un lit catalytique de la zone réactionnelle.

Suivant le second type de technologies, le catalyseur est disposé de telle façon que la réaction et la distillation procèdent généralement de manière indépendante et consécutive, comme l'enseignent les brevets US-A-4.847.430, US-A-5.130.102 et US-A-5.368.691, la vapeur de la distillation ne traversant pratiquement pas tout lit catalytique de la zone réactionnelle. Ainsi, si l'on utilise ce type de technologie, le procédé selon l'invention est généralement tel que l'écoulement du liquide à isomériser est co-courant à l'écoulement du flux gazeux comprenant de l'hydrogène et tel que la vapeur de la distillation n'est pratiquement pas en contact avec le catalyseur (ce qui se traduit généralement en pratique par le fait que ladite vapeur est séparée dudit liquide à isomériser), pour tout lit catalytique de la partie interne de la zone d'isomérisation. De tels systèmes comportent généralement au moins un dispositif de distribution de liquide qui peut être par exemple un répartiteur de liquide, dans tout lit catalytique de la zone réactionnelle, généralement situé au-dessous dudit lit. Néanmoins, dans la mesure où ces technologies ont été conçues pour des réactions catalytiques intervenant entre des réactifs liquides, elles ne peuvent convenir sans modification pour une réaction catalytique d'isomérisation, pour laquelle on utilise de l'hydrogène à l'état gazeux. Pour tout lit catalytique de la partie interne de la zone d'isomérisation, il est donc généralement nécessaire d'adjoindre un dispositif d'introduction de flux gazeux comprenant de l'hydrogène. Ainsi, la zone de distillation selon l'invention comporte au moins un dispositif de distribution de liquide, généralement situé au-dessous du lit catalytique, et au moins un dispositif d'introduction de flux gazeux comprenant de l'hydrogène, ledit flux gazeux étant apporté à l'entrée d'au moins un lit catalytique de la zone réactionnelle d'isomérisation interne à la zone de distillation et étant introduit séparément de la charge.

Une des réalisations préférées du procédé selon l'invention est telle que le catalyseur de la partie interne de la zone d'isomérisation est disposé dans la zone réactionnelle suivant le dispositif de base décrit dans le brevet US-A-5.368.691, aménagé de manière que tout lit catalytique de la partie interne de la zone d'isomérisation soit alimenté par un flux gazeux comprenant de l'hydrogène, régulièrement distribué à sa base, par exemple selon l'une des techniques décrites ci-avant. Suivant cette technologie, si la zone de distillation comprend une seule colonne et si la zone d'isomérisation est en totalité interne à ladite colonne, le catalyseur compris dans tout lit catalytique, interne à la zone de distillation, est alors en contact avec une phase liquide ascendante, générée par le reflux introduit au sommet de la colonne de distillation, et avec le flux gazeux comprenant de l'hydrogène qui circule dans le même sens que le liquide, le contact avec la phase vapeur de la distillation étant évité en faisant transiter cette dernière par une cheminée spécialement aménagée.

Les conditions opératoires de la partie de la zone d'isomérisation interne à la zone de distillation sont liées aux conditions opératoires de la distillation. La distillation est conduite sous une pression généralement comprise entre 2 et 20 bar, de préférence entre 4 et 10 bar (1 bar = 10⁵ Pa). La température de tête de zone de distillation est généralement comprise entre 40 et 180°C et la température de fond de zone de distillation est généralement comprise entre 100 et 280°C. La réaction d'isomérisation est conduite dans des conditions qui sont le plus généralement intermédiaires entre celles établies en tête et en fond de zone de distillation, à une température comprise entre 70 et 200°C, et de préférence comprise entre 100 et 160°C, et à une pression comprise entre 2 et 20 bar, de préférence entre 4 et 10 bar. Le liquide soumis à l'isomérisation est alimenté par un flux gazeux comprenant de l'hydrogène dont le débit est tel que le rapport molaire hydrogène sur hydrocarbures (généralement à l'entrée de la partie interne de la zone réactionnelle) est généralement compris entre 0,01 et 0,8 et de préférence compris entre 0,06 et 0,5.

Lorsque la zone d'isomérisation est en partie externe à la colonne de distillation, le catalyseur disposé dans ladite partie externe l'est suivant toute technologie connue de l'homme de métier dans des conditions opératoires (température, pression...) indépendantes ou non, de préférence indépendantes, des conditions opératoires de la zone de distillation.

Dans la partie de la zone d'isomérisation externe à la zone de distillation, quand elle existe, les conditions opératoires sont généralement les suivantes. La pression requise pour cette étape d'isomérisation est généralement comprise entre 1 et 60 bar absolus, de préférence entre 2 et 50 bar et de façon encore plus préférée entre 5 et 35 bar. La température opératoire de la partie externe de la zone d'isomérisation est généralement comprise entre 80 et 400 °C, de préférence entre 100 et 350 °C et de façon préférée entre 120 et 320 °C. La vitesse spatiale au sein de ladite partie externe, calculée par rapport au catalyseur, est généralement comprise entre 0,5 et 50 et plus particulièrement entre 1 et 30 h⁻¹ (volume de charge par volume de catalyseur et par heure). Le débit du flux gazeux comprenant de l'hydrogène alimentant la partie externe de la zone d'isomérisation est tel que le rapport molaire hydrogène sur hydrocarbures (généralement à l'entrée de la partie externe de la zone réactionnelle) est généralement compris entre 0,01 et 0,8 et de préférence compris entre 0,06 et 0,5. Mais les conditions de température et de pression peuvent aussi, dans le cadre du procédé de la présente invention, être comprises entre celles qui sont établies en tête et en fond de zone de distillation.

Lorsque les conditions opératoires de la zone de distillation et de la zone réactionnelle sont bien choisies, le procédé selon la présente invention peut permettre de convertir, en isopentane, plus de 80% du n-pentane de la charge, voire plus de 90%.

Parmi les catalyseurs pouvant être utilisés dans tout lit catalytique de la partie interne de la zone d'isomérisation, dans le procédé selon l'invention, on peut citer un catalyseur à haute activité, comme par exemple un catalyseur à base d'alumine halogénée, de préférence chlorée. De tels catalyseurs sont généralement constitués d'un support en alumine éta et/ou gamma de haute pureté (par exemple un mélange d'alumine êta (de 85 à 95 % en poids par rapport au support) et d'alumine gamma (en complément en poids), ou bien ladite alumine pouvant être constituée de 100 % d'alumine gamma), renfermant généralement de 2 à 10% en poids de chlore, de 0,1 à 0,35% en poids de platine et éventuellement d'autres métaux. lls peuvent être mis en oeuvre avec une vitesse spatiale de 0,5 à 10 h⁻¹, de préférence de 1 à 4 h⁻¹. Le maintien du taux d'halogénation, de préférence de chloration, du catalyseur nécessite généralement l'appoint en continu d'un composé halogéné, de préférence chloré, comme le tétrachlorure de carbone ou le perchloroéthylène, injecté en mélange avec la charge à une concentration de 50 à 1000 parties par million en poids. Mais tout autre catalyseur pouvant réaliser l'isomérisation dans les conditions opératoires de la distillation peut aussi être utilisé selon le procédé de la présente invention.

Ainsi, parmi les catalyseurs pouvant être utilisés dans tout lit catalytique de l'éventuelle partie externe de la zone d'isomérisation, tout catalyseur connu de l'homme du métier pour réaliser ladite réaction, comme les trois types de catalyseurs cités dans la première partie de la présente description, est envisageable. A titre d'exemple non limitatif, on peut citer les catalyseur à base d'alumine, c'est-à-dire les catalyseurs dont le support comprend principalement une alumine, généralement halogénée, de préférence chlorée, ladite alumine pouvant être par exemple un mélange d'alumine êta (de 85 à 95 % en poids par rapport au support) et d'alumine gamma (en complément en poids), ou bien ladite alumine pouvant être constituée de 100 % d'alumine gamma. On peut aussi citer les catalyseurs à base de zéolithe, c'est-à-dire dont le support comprend principalement au moins une zéolithe éventuellement modifiée par tout traitement particulier connu de l'homme du métier, de préférence choisie dans le groupe formé par les zéolithes de type structural mordénite, de préférence la mordénite, et les zéolithes de type structural mazzite, de préférence la zéolithe oméga; mais ces catalyseurs ne conviennent généralement pas pour isomériser les hydrocarbures, de préférence les paraffines, contenant essentiellement 4 atomes de carbone par molécule, ainsi qu'il est connu de l'homme du métier. Les catalyseurs, tels que par exemple ceux cités précédemment, qu'ils soient à base d'alumine ou de zéolithe, comprennent généralement au moins un métal du groupe VIII de la classification périodique des éléments, de préférence choisi dans le groupe formé par le nickel, le platine et le palladium.

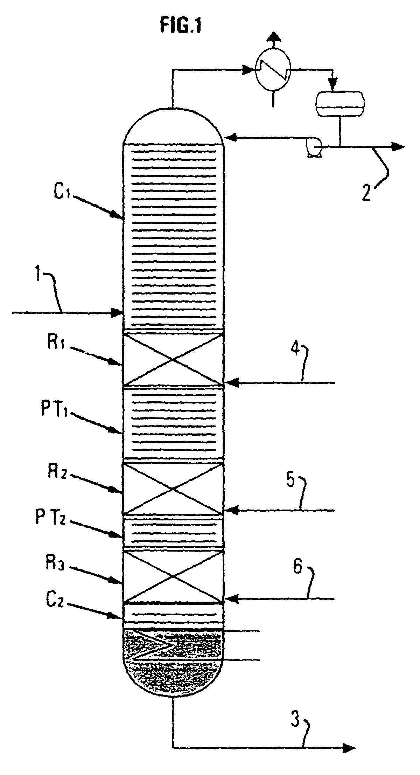

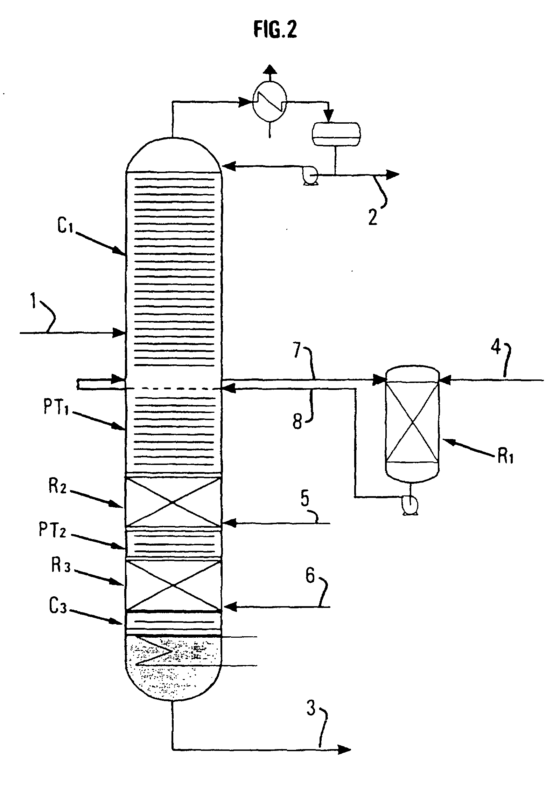

Les figures 1 et 2 jointes illustrent l'invention, et plus précisément deux mises en oeuvre préférées du procédé selon l'invention, sans en limiter la portée.

La charge à traiter contenant un mélange comprenant des normales paraffines et des isoparaffines comprenant 5 et 6 atomes de carbone par molécule est introduite dans la colonne par la ligne (1). La colonne est constituée de zones de séparation notée C1, C2, PT1 et PT2 et de cellules réactionnelles, notées R1, R2 et R3, de préférence à travers lesquelles circule la vapeur de telle façon que ladite vapeur ne soit pas en contact avec le catalyseur. On soutire par la ligne (2) de la tête de la colonne un effluent liquide riche en isopentane, et du fond de la colonne, par la ligne (3) un effluent contenant essentiellement les composés de la charge autre que le n-pentane et l'isopentane. Les lignes (4), (5) et (6) représentent les apports en hydrogène à l'entrée des cellules réactionnelles R1, R2 et R3.

La figure 1 représente une réalisation du procédé dans laquelle la zone réactionnelle est complétement intégrée à la colonne. Cette zone réactionnelle comprend les éléments R1, PT1, R2, PT2 et R3.

La figure 2 représente une réalisation du procédé dans laquelle la zone réactionnelle est partiellement externe à la colonne. Le prélèvement du liquide issu de la zone de distillation C1 est réalisé par la ligne (7) qui amène ce liquide à la cellule réactionnelle R1. Le liquide en sortie de la cellule réactionnelle R1 est dirigé vers le haut de la zone de distillation PT1 par la ligne (8).

Les exemples suivants illustrent l'invention sans en limiter la portée. Les calculs sont effectués à l'aide du logiciel PROII version 3.3 de Simulation Sciences Inc. Les équilibres liquide-vapeur sont représentés avec l'équation d'état de Peng-Robinson. La solubilité de l'hydrogène dans les hydrocarbures est prise en compte par un coefficient de Henry. Le type de catalyseur est pris en compte d'après des études sur unité pilote d'isomérisation en lit fixe.

### EXEMPLE 1 (selon l'invention): Exemple calculé selon le schéma de la figure 1

La charge est constituée par un naphta léger dont la composition pondérale est la suivante :

| | |
|---|---|
| isopentane | 24,6 |
| normalpentane | 27,8 |
| 2,2-diméthylbutane | 1,7 |
| 2,3-diméthylbutane | 2,8 |
| 2-méthylpentane | 15,0 |
| 3-méthylpentane | 8,5 |
| normalhexane | 13,2 |
| méthylcyclopentane | 3,6 |
| cyclohexane | 1,5 |
| C₇⁺ | 1,3 |

Cette charge a un indice d'octane recherche (RON) de 71,2 et un indice d'octane moteur (MON) de 70,7. Elle alimente une colonne de distillation réactive à un débit de 93,6 kg/h. La colonne possède 38 plateaux théoriques et fonctionne sous une pression de tête de 7,5 bar, une température de tête de 99 °C et une température de fond de 142 °C. La charge est introduite dans la colonne au 27ème plateau (le plateau n°1 est le condenseur, le plateau n°38 est le rebouilleur). Trois zones réactives sont utilisées dans cette réalisation du procédé, à travers lesquelles circule la vapeur de telle façon que ladite vapeur ne soit pas en contact avec le catalyseur. Elles sont intercalées respectivement entre les plateaux théoriques 28 et 29, 33 et 34, 36 et 37. Le catalyseur utilisé comprend 0,3 % de platine, 8 % de chlore sur alumine qui est constituée de 90 % d'alumine éta et 10 % d'alumine gamma. Le rapport molaire hydrogène/hydrocarbures à l'entrée du réacteur est égal à 0,1.

On soutire en tête 41,9 kg/h de distillat liquide riche en isopentane et contenant environ 3 % en mole de normal pentane et en fond de colonne 50,2 kg/h d'un effluent liquide renfermant 12 % en mole d'isopentane et 3 % en mole de normal pentane, le reste est constitué des composés à 6 atomes de carbone par molécule de la charge. Le taux de conversion du normal pentane est donc de 82,8 %. L'indice d'octane de la coupe pétrolière reconstituée après mélange du distillat et du résidu augmente d'environ 7 points (le RON est égal à 78,6 et le MON à 77,2).

### EXEMPLE 2 (selon l'invention) : Exemple calculé selon le schéma de la figure 1

La charge est identique à la charge utilisé à l'exemple 1. Elle a un indice d'octane recherche (RON) de 71,2 et un indice d'octane moteur (MON) de 70,7. Elle alimente une colonne de distillation réactive à un débit de 93,6 kg/h. La colonne est la même que celle de l'exemple 1. Elle fonctionne sous une pression de tête de 7,5 bar, une température de tête de 99 °C et une température de fond de 142 °C. Le catalyseur utilisé comprend 0,3 % de platine, 6,5 % de chlore sur alumine qui est constituée de 100 % d'alumine gamma. Le rapport molaire hydrogène/hydrocarbures à l'entrée du réacteur est égal à 0,1.

On soutire en tête 41,9 kg/h de distillat liquide riche en isopentane et contenant environ 3 % en mole de normalpentane et en fond de colonne 50,2 kg/h d'un effluent liquide renfermant 12 % en mole d'isopentane et 3 % en mole de normalpentane, le reste est constitué des composés à 6 atomes de carbone par molécule de la charge. Le taux de conversion du normalpentane est donc de 82,7 %. L'indice d'octane de la coupe pétrolière reconstituée après mélange du distillat et du résidu augmente d'environ 7 points (le RON est égal à 78,5 et le MON à 77,0).

### EXEMPLE 3 (selon l'invention) : Exemple calculé selon le schéma de la figure 2

La charge est identique à la charge utilisée à l'exemple 1. Elle a un indice d'octane recherche (RON) de 71,2 et un indice d'octane moteur (MON) de 70,7. Elle alimente une colonne de distillation réactive à un débit de 93,6 kg/h. La colonne possède 55 plateaux théoriques et fonctionne sous une pression de tête de 7,5 bar, une température de tête de 98 °C et une température de fond de 140 °C. La charge est introduite dans la colonne au 27ème plateau (le plateau n°1 est le condenseur, le plateau n°55 est le rebouilleur).

Trois cellules réactives sont utilisées dans cette réalisation du procédé, à travers lesquelles circule la vapeur de telle façon que ladite vapeur ne soit pratiquement pas en contact avec le catalyseur. Elles sont intercalées respectivement entre les plateaux théoriques 38 et 39, 48 et 49, 53 et 54. Le rapport molaire hydrogène/hydrocarbures à l'entrée du réacteur est égal à 0,1.

On soutire en tête 46,7 kg/h de distillat liquide riche en isopentane et contenant environ 8 % en mole de normalpentane et en fond de colonne 46,7 kg/h d'un effluent liquide renfermant 6 % en mole d'isopentane et 1 % en mole de normalpentane, le reste est constitué des composés à 6 atomes de carbone par molécule de la charge. Le taux de conversion du normalpentane est donc de 90 %. L'indice d'octane de la coupe pétrolière reconstituée après mélange du distillat et du résidu augmente d'environ 8 points (le RON est égal à 79,1 et le MON à 77,6).

## Revendications

1. Procédé d'isomérisation d'une charge comprenant essentiellement des hydrocarbures contenant principalement de 4 à 8 atomes de carbone par molécule, tel que l'on traite ladite charge dans une zone de distillation, comportant une zone d'épuisement et une zone de rectification, associée à une zone réactionnelle d'isomérisation, au moins en partie interne à la zone de distillation, en présence d'un catalyseur d'isomérisation et d'un flux gazeux comprenant de l'hydrogène dans lequel ledit flux gazeux est apporté à l'entrée d'au moins un lit catalytique de la zone réactionnelle d'isomérisation interne à la zone de distillation et est introduit séparément de la charge.

2. Procédé selon la revendication 1 dans lequel la zone d'isomérisation comprend au moins deux lits catalytiques et dans lequel un dispositif de distribution d'un flux gazeux comprenant de l'hydrogène est adjoint à chaque lit catalytique.

3. Procédé selon l'une des revendications 1 ou 2, tel que la distillation est réalisée sous une pression comprise entre 2 et 20 bars, la température de tête de zone de distillation étant comprise entre 40 et 180°C et la température de fond de zone de distillation étant comprise entre 100 et 280°C.

4. Procédé selon l'une des revendications 1 à 3 dans lequel la zone réactionnelle est totalement interne à la zone de distillation.

5. Procédé selon l'une des revendications 1 à 4 dans lequel la zone réactionnelle est à la fois partiellement incorporée dans la zone de rectification de la zone de distillation et partiellement externe à la zone de distillation.

6. Procédé selon la revendication 5 tel que, pour la partie de la réaction d'isomérisation externe à la zone de distillation, la réaction d'isomérisation est conduite à une température comprise entre 80 et 400°C, à une pression comprise entre 1 et 60 bars, la vitesse spatiale au sein de la partie externe de la zone d'isomérisation, calculée par rapport au catalyseur, est généralement comprise entre 0,5 et 50 h⁻¹ (volume de charge par volume de catalyseur et par heure), et le débit du flux gazeux comprenant de l'hydrogène alimentant la partie externe de la zone d'isomérisation est tel que le rapport molaire hydrogène/hydrocarbures est compris entre 0,01 et 0,8.

7. Procédé selon l'une des revendications 1 à 6 tel que, pour la partie de la réaction d'isomérisation interne à la zone de distillation, la pression requise pour cette étape d'isomérisation est comprise entre 1 et 60 bars, la température est comprise entre 100 et 400°C, et le débit du flux gazeux comprenant de l'hydrogène alimentant la partie interne de la zone d'isomérisation est tel que le rapport molaire hydrogène/hydrocarbures est compris entre 0,01 et 0,8.

8. Procédé selon l'une des revendications 1 à 7 tel que le catalyseur d'isomérisation est en contact avec une phase liquide descendante et avec une phase vapeur ascendante, pour tout lit catalytique de la partie interne de la zone d'isomérisation.

9. Procédé selon la revendication 8 tel que le flux gazeux comprenant de l'hydrogène nécessaire à la zone d'isomérisation est joint à la phase vapeur.

10. Procédé selon l'une des revendications 1 à 7 tel que l'écoulement du liquide à isomériser est co-courant à l'écoulement du flux gazeux comprenant de l'hydrogène, pour tout lit catalytique de la partie interne de la zone d'isomérisation.

11. Procédé selon l'une des revendications 1 à 7 ou 10 tel que l'écoulement du liquide à isomériser est co-courant à l'écoulement du flux gazeux comprenant de l'hydrogène et tel que la vapeur de la distillation n'est pratiquement pas en contact avec le catalyseur, pour tout lit catalytique de la partie interne de la zone d'isomérisation.

12. Procédé selon la revendication 11 tel que la zone d'hydrogénation comporte au moins un dispositif de distribution de liquide dans tout lit catalytique de ladite zone.

13. Procédé selon la revendication 12 tel que, pour chaque lit catalytique de la partie interne de la zone réactionnelle, le liquide est distribué par un moyen de distribution du liquide situé au-dessous du lit catalytique et le flux gazeux est introduit par un moyen d'introduction du flux gazeux situé au-dessous ou au sein du lit catalytique.

14. Procédé selon l'une des revendications 12 ou 13 tel que pour chaque lit catalytique de la partie interne de la zone réactionnelle, le flux gazeux est introduit par un moyen d'introduction du flux gazeux dans le lit catalytique, le liquide est distribué par un moyen de distribution de liquide dans le lit catalytique, les deux moyens étant identiques.

15. Procédé selon l'une des revendications 12 ou 13 tel que le flux gazeux est introduit par un moyen d'introduction du flux gazeux dans le lit catalytique, le liquide est distribué par un moyen de distribution de liquide dans le lit catalytique, le moyen d'introduction du flux gazeux étant disposé sensiblement au niveau du moyen de distribution de liquide, le gaz et le liquide étant introduits de façon séparée dans le lit catalytique.

16. Procédé selon la revendication 15 tel que le moyen d'introduction du flux gazeux est disposé au sein du lit catalytique.

17. Procédé selon la revendication 15 tel que le moyen d'introduction du flux gazeux est disposé au-dessous du lit catalytique.

18. Procédé selon l'une des revendications 1 à 17 tel que le catalyseur utilisé dans la zone d'isomérisation comprend au moins un métal choisi dans le groupe formé par les éléments du groupe VIII de la Classification Périodique des Eléments et un support.

19. Procédé selon la revendication 18 tel que ledit support est à base d'alumine.

20. Procédé selon la revendication 18 tel que ledit support est à base de zéolithe.

21. Procédé selon la revendication 20 tel que ladite zéolithe est choisie dans le groupe formé par les zéolithes de type structural mordénite et les zéolithes de type structural mazzite.

22. Procédé selon l'une des revendications 1 à 21 tel qu'une fraction de l'hydrogène compris dans l'effluent de tête de la zone de distillation est récupérée, puis comprimée et réutilisée dans ladite zone de distillation.

23. Procédé selon l'une des revendications 1 à 22 tel que la charge comprend essentiellement des paraffines.

## Patentansprüche

1. Verfahren zur Isomerisierung einer Beschickung, die im Wesentlichen Kohlenwasserstoffe umfasst, die hauptsächlich 4 bis 8 Kohlenstoffatome pro Molekül enthalten, derart, dass man die Beschickung in einer Destillationszone behandelt, die eine Erschöpfungszone und eine Rektifikationszone umfasst, welche einer Isomerisierungsreaktionszone zugeordnet ist, wenigstens teilweise in der Destillationszone, in Gegenwart eines Isomerisierungskatalysators und eines wasserstoffhaltigen Gasstroms, in welche der Gasstrom am Eingang von wenigstens einem katalytischen Bett der Isomerisierungsreaktionszone innerhalb der Destillationszone zugeführt wird und getrennt von der Beschickung eingeführt wird.

2. Verfahren nach Anspruch 1, bei dem die Isomerisierungszone wenigstens zwei katalytische Betten umfasst und in welcher eine Vorrichtung zur Verteilung eines Wasserstoff umfassenden Gasstroms, anliegend an jedem katalytischen Bett, vorliegt.

3. Verfahren nach einem der Ansprüche 1 oder 2, derart, dass die Destillationszone unter einem Druck zwischen 2 und 20 bar verwirklicht wird, wobei die Temperatur am Kopf der Destillationszone zwischen 40 und 180°C liegt und die Temperatur am Boden der Destillationszone zwischen 100 und 280°C liegt.

4. Verfahren nach einem der Ansprüche 1 bis 3, in dem die Reaktionszone vollständig innerhalb der Destillationszone ist.

5. Verfahren nach einem der Ansprüche 1 bis 4, in dem die. Reaktionszone gleichzeitig teilweise in die Rektifikationszone der Destillationszone einverleibt und teilweise außerhalb der Destillationszone ist.

6. Verfahren nach Anspruch 5, derart, dass für den Teil der Isomerisierungsreaktion außerhalb der Destillationszone die Isomerisierungsreaktion bei einer Temperatur zwischen 80 und 400°C, bei einem Druck zwischen 1 und 60 bar durchgeführt wird, wobei die Raumgeschwindigkeit in dem Teil außerhalb der Isomerisierungszone, berechnet im Verhältnis zum Katalysator, im Allgemeinen zwischen 0,5 und 50 h⁻¹ (Beschickungsvolumen pro Katalysatorvolumen und pro Stunde) liegt, und der und der Durchsatz des Wasserstoff umfassenden Gasstroms, weicher den Teil außerhalb der Isomerisierungszone speist, derart ist, dass das Molverhältnis Wasserstoff/Kohlenwasserstoffe zwischen 0,01 und 0,8 liegt.

7. Verfahren nach einem der Ansprüche 1 bis 6, derart, dass für den Teil der Isomerisierungsreaktion innerhalb der Destillationszone der für diese Isomerisierungsstufe erforderliche Druck zwischen 1 und 60 bar, die Temperatur zwischen 100 und 400°C und der Wasserstoff umfassende Gasstromdurchsatz, welcher den Teil innerhalb der Isomerisierungszone speist, derart ist, dass das Molverhältnis Wasserstoff/Kohlenwasserstoffe zwischen und 0,01 und 0,8 liegt.

8. Verfahren nach einem der Ansprüche 1 bis 7, derart, dass der Isomerisierungskatalysator in Kontakt mit einer flüssigen absteigenden Phase ist und mit einer aufsteigenden Dampfphase für jedes katalytische Bett des Teils innerhalb der Isomerisierungszone.

9. Verfahren nach Anspruch 8, derart, dass der Wasserstoff umfassende Gasstrom, welcher für die Isomerisierungszone notwendig ist, mit der Dampfphase vereint ist.

10. Verfahren nach einem der Ansprüche 1 bis 7, derart, dass der zu isomerisierende Flüssigkeitsstrom gleichströmend zum Wasserstoff umfassenden Gasstrom für jedes katalytische Bett des Teils innerhalb der Isomerisierungszone ist.

11. Verfahren nach einem der Ansprüche 1 bis 7 oder 10, derart, dass der zu isomerisierende Flüssigkeitsstrom gleichströmend zum Wasserstoff umfassenden Gasstrom ist und derart, dass der Destillationsdampf praktisch nicht in Kontakt mit dem Katalysator für jedes katalytische Bett des Teils innerhalb der Isomerisierungszone ist.

12. Verfahren nach Anspruch 11, derart, dass die Hydrierungszone wenigstens eine Vorrichtung zur Verteilung von Flüssigkeit in jedem katalytischen Bett der Zone umfasst.

13. Verfahren nach Anspruch 12, derart, dass für jedes katalytische Bett des Teils innerhalb der Reaktionszone die Flüssigkeit durch ein Flüssigkeitsverteilungsmittel verteilt wird, das unter dem katalytischen Bett angeordnet ist, und der Gasstrom durch ein Gasstrom-Einführungsmittel eingeführt wird, das unterhalb oder in dem katalytischen Bett angeordnet ist.

14. Verfahren nach einem der Ansprüche 12 oder 13, derart, dass für jedes katalytische Bett des Teils innerhalb der Reaktionszone der Gasstrom durch ein Mittel zur Einführung des Gasstroms in das katalytische Bett angeführt wird, die Flüssigkeit durch ein Mittel zur Verteilung von Flüssigkeit in dem katalytischen Bett verteilt wird, wobei die beiden Mittel identisch sind.

15. Verfahren nach einem der Ansprüche 12 oder 13, derart, dass der Gasstrom durch ein Mittel zur Einführung eines Gasstroms in das katalytische Bett eingeführt wird, die Flüssigkeit durch ein Flüssigkeits-Verteilungsmittel in dem katalytischen Bett verteilt wird, wobei das Mittel zur Einführung des Gasstroms im Wesentlichen auf der Ebene des Mittels zur Verteilung von Flüssigkeit angeordnet ist und wobei ein Gas- und Flüssigkeit getrennt in das katalytische Bett eingeführt werden.

16. Verfahren nach Anspruch 15, derart, dass das Mittel zur Einführung des Gasstroms in dem katalytischen Bett angeordnet ist.

17. Verfahren nach Anspruch 15, derart, dass das Mittel zur Einführung des Gasstroms unter dem katalytischen Bett angeordnet ist.

18. Verfahren nach einem der Ansprüche 1 bis 17, derart, dass der in der Isomerisierungszone verwendete Katalysator wenigstens ein Metall, gewählt aus der Gruppe umfasst, die gebildet wird durch die Elemente der Gruppe VIII des Periodensystems der Elemente, und einen Träger.

19. Verfahren nach Anspruch 18, derart, dass der Träger auf Aluminiumoxidbasis ist.

20. Verfahren nach Anspruch 18, derart, dass der Träger auf Zeolithbasis ist.

21. Verfahren nach Anspruch 20, derart, dass der Zeolith gewählt wird aus der Gruppe, die gebildet wird durch die Zeolithe vom Mordenit-Strukturtyp und die Zeolithe vom Mazzit-Strukturtyp.

22. Verfahren nach einem der Ansprüche 1 bis 21, derart, dass eine Wasserstofffraktion, die in dem Kopfabstrom der Destillationszone vorliegt, gewonnen wird und dann komprimiert und in der Destillationszone wieder verwendet wird.

23. Verfahren nach einem der Ansprüche 1 bis 22, derart, dass die Beschickung im Wesentlichen Paraffine umfasst.

## Claims

1. A process for isomerising a feed containing essentially hydrocarbons containing principally 4 to 8 carbon atoms per molecule, wherein said feed is treated in a distillation zone comprising an exhausting zone and a rectification zone, associated with an isomerisation reaction zone, at least partially internal to the distillation zone, in the presence of an isomerisation catalyst and a gas stream containing hydrogen, wherein said gas stream is fed at the inlet of at least one catalytic bed of the isomerisation reaction zone internal to the distillation zone, and is fed separately from the feed

2. A process according to claim 1, wherein the isomerisation zone comprise at least two catalytic beds and wherein a means for introducing a gas stream comprising hydrogen is associated with each catalytic bed.

3. A process according to claims 1 or 2, wherein the distillation is carried out at a pressure which is in the range 2 to 20 bars, the overhead temperature in the distillation zone being in the range 40°C to 180°C and the temperature at the bottom of the distillation zone being in the range 100°C to 280°C.

4. A process according to anyone of claims 1 to 3, wherein the reaction zone is completely internal to the distillation zone.

5. A process according to anyone of claims 1 to 4, wherein the reaction zone is both partially incorporated into the rectification zone of the distillation zone and partially external to the distillation zone.

6. A process according to claim 5 wherein, for the portion of the isomerisation zone which is external to the distillation zone, the isomerisation reaction is carried out at a temperature which is in the range 80°C to 400°C, at a pressure which is in the range 1 to 60 bars, the space velocity in the external portion of the isomerisation zone, calculated with respect to the catalyst, is generally in the range 0.5 to 50 h⁻¹ (volume of feed per volume of catalyst per hour) and the flow rate of the gas stream containing hydrogen supplied to the external portion of the isomerisation zone is such that the hydrogen/hydrocarbons molar ratio is in the range 0.01 to 0.8.

7. A process according to anyone of claims 1 to 6 wherein, for the portion of the isomerisation zone which is internal to the distillation zone, the pressure required for this isomerisation step is in the range 1 to 60 bars, the temperature is in the range 100°C to 400°C, and the flow rate of the gas stream containing hydrogen supplied to the internal portion of the isomerisation zone is such that the hydrogen/hydrocarbons molar ratio is in the range 0.01 to 0.8.

8. A process according to anyone of claims 1 to 7, wherein the isomerisation catalyst is in contact with a descending liquid phase and with an ascending vapour phase in each catalytic bed in the internal portion of the isomerisation zone.

9. A process according to claim 8, wherein the gas stream containing hydrogen required for the isomerisation zone is added to the vapour phase.

10. A process according to anyone of claims 1 to 7, wherein the flow of liquid to be isomerised is a co-current with the flow of the gas stream containing hydrogen in each catalytic bed in the internal portion of the isomerisation zone.

11. A process according to anyone of claims 1 to 7 or 10, wherein the flow of the liquid to be isomerised is a co-current with the flow of the gas stream containing hydrogen and such that the distillation vapour does not in practice come into contact with the catalyst in each catalytic bed in the internal portion of the isomerisation zone.

12. A process according to claim 11, wherein the hydrogenation zone comprises at least one means for distributing liquid in each catalytic bed of said zone.

13. A process according to claim 12 wherein, for each catalytic bed in the internal portion of the reaction zone, the liquid is distributed by a liquid distribution means located below the catalytic bed and the gas stream is introduced by a means for introducing a gas stream located below or in the catalytic bed.

14. A process according to anyone of claims 12 or 13, wherein, for each catalytic bed in the internal portion of the reaction zone, the gas stream is introduced by a means for introducing a gas stream into the catalytic bed, the liquid is distributed via means for distributing liquid in the catalytic bed, and the two means are identical.

15. A process according to anyone of claims 12 or 13, wherein the gas stream is introduced into the catalytic bed by a means for introducing a gas stream, the liquid is distributed in the catalytic bed by a means for distributing liquid, the means for introducing a gas stream being disposed substantially at the level of the liquid distribution means, the gas and the liquid being introduced separately into the catalytic bed.

16. A process according to claim 15, wherein the means for introducing a gas stream is located in the catalytic bed.

17. A process according to claim 15, wherein the means for introducing a gas stream is located below the catalytic bed.

18. A process according to anyone of claims 1 to 17, wherein the catalyst used in the isomerisation zone comprises at least one metal selected from the group formed by elements from group VIII of the periodic classification of the elements and a support.

19. A process according to claim 18, wherein said support is based on alumina.

20. A process according to claim 18, wherein said support is based on zeolite.

21. A process according to claim 20, wherein said zeolite is selected from the group formed by zeolites of structural type mordenite and zeolites of structural type mazzite.

22. A process according to claim 1, wherein a fraction of the hydrogen comprised in the overhead effluent from the distillation zone is recovered then compressed and re-used in said distillation zone.

23. A process according to anyone of claims 1 to 22, wherein the feed comprises essentially paraffins.
